(19) Europäisches Patentamt
European Patent Office
Office européen des brevets

(11) **EP 4 583 439 A1**

(12) **EUROPEAN PATENT APPLICATION**

(43) Date of publication:
**09.07.2025 Bulletin 2025/28**

(21) Application number: **24150785.4**

(22) Date of filing: **08.01.2024**

(51) International Patent Classification (IPC):
*H04L 1/1812* (2023.01)   *H04L 1/06* (2006.01)
*H04L 1/1829* (2023.01)   *H04B 7/026* (2017.01)
*H04L 1/00* (2006.01)

(52) Cooperative Patent Classification (CPC):
**H04L 1/1812; H04B 7/026; H04L 1/06;**
**H04L 1/1845;** H04L 2001/0097

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **AHSEN, Muhammad**
**Aalborg (DK)**

• **YANAKIEV, Boyan**
**Aalborg (DK)**
• **ROSA, Claudio**
**Randers NV (DK)**
• **NAVARRO, Carles**
**Aalborg (DK)**
• **OJEKUNLE ADEOGUN, Ramoni**
**Aalborg (DK)**

(74) Representative: **Nokia EPO representatives**
**Nokia Technologies Oy**
**Karakaari 7**
**02610 Espoo (FI)**

(54) **COOPERATION BETWEEN DEVICES IN RATE SPLITTING**

(57)     Embodiments of the present disclosure are directed to cooperation between devices in rate splitting. A method comprises: at a first apparatus, receiving, from a third apparatus, configuration information indicating a cooperation mode with a second apparatus in decoding data from the third apparatus; decoding, from the received signal, common data and first private data; transmitting, to the third apparatus and based on a result of the decoding, first feedback information for the common data and the first private data; receiving a decoding result of the common data from the second apparatus; in accordance with a determination of a negative acknowledgement, re-decoding at least one of the common data or the first private data based on the received signal and the decoding result of the common data; and transmitting, to the third apparatus, second feedback information for the common data and/or the first private data.

FIG. 3

**EP 4 583 439 A1**

**Description**

**FIELDS**

Various example embodiments of the present disclosure generally relate to the field of telecommunication and in particular, to methods, devices, apparatuses and computer readable storage medium for cooperation between devices in rate splitting.

**BACKGROUND**

Rate-splitting (RS) relies on the split of user messages into common and private parts, superimposed transmission from the transmitter, and successive interference cancellation (SIC) at the receivers. Cooperative rate splitting (CRS) is a technique based on the principle of rate splitting at the transmitter side and cooperation at the receiver or user side (relay and destination). Cooperative rate splitting is performed over the multiple input single output (MISO) broadcast channel with user relaying, and performance benefits over cooperative non-orthogonal multiple access (NOMA) technology. The source or transmitter applies the rate splitting principle while encoding the data of multiple users. The source splits the data of each user into a common part and a private part. The common parts of all users are combined and encoded into one stream such that it can be decoded by all the receivers or users. The private parts of all the users are encoded into individual streams such that it can be encoded by the intended users only. In this way, the number of the streams at the source is the total number of users plus one stream.

**SUMMARY**

In a first aspect of the present disclosure, there is provided a first apparatus. The first apparatus comprises at least one processor; and at least one memory storing instructions that, when executed by the at least one processor, cause the first apparatus at least to perform: receiving, from a third apparatus, configuration information indicating a cooperation mode with a second apparatus in decoding data from the third apparatus; receiving, from the third apparatus, a signal; decoding, from the received signal, common data and first private data of the first apparatus, wherein the common data is accessible to the first apparatus and the second apparatus; transmitting, to the third apparatus and based on a result of the decoding, first feedback information comprising a first feedback indication for the common data and a second feedback indication for the first private data; receiving a decoding result of the common data from the second apparatus; in accordance with a determination that at least one of the first feedback indication or the second feedback indication indicates a negative acknowledgement, re-decoding at least one of the common data or the first private data based on the received signal and the decoding result of the common data received from the second apparatus; and transmitting, to the third apparatus and based on a result of the re-decoding, second feedback information comprising at least one of a third feedback indication for the common data or a fourth feedback indication for the first private data.

In a second aspect of the present disclosure, there is provided an apparatus. The apparatus comprises at least one processor; and at least one memory storing instructions that, when executed by the at least one processor, cause the second apparatus at least to perform: transmitting, to a first apparatus and a second apparatus, configuration information indicating a cooperation mode in decoding data between the first apparatus and the second apparatus; transmitting a signal to the first apparatus and the second apparatus, the signal being generated based on common data accessible to the first and second apparatuses, first private data of the first apparatus, and second private data of the second apparatus; receiving, from the first apparatus, first feedback information associated with the first apparatus, the first feedback information indicating a first feedback indication for the common data and a second feedback indication for the first private data; receiving, from the second apparatus, first feedback information associated with the second apparatus, the first feedback information indicating a first feedback indication for the common data and a second feedback indication for the second private data; in accordance with a determination that at least one feedback indication in the received first feedback information indicates a negative acknowledgement, receiving, from at least one of the first apparatus or the second apparatus, second feedback information for at least one of the common data, the first private data, or the second private data; and determining, based on the second feedback information, whether to perform a retransmission of the at least one of the common data, the first private data, or the second private data.

In a third aspect of the present disclosure, there is provided a method. The method comprises: receiving, from a third apparatus, configuration information indicating a cooperation mode with a second apparatus in decoding data from the third apparatus; receiving, from the third apparatus, a signal; decoding, from the received signal, common data and first private data of the first apparatus, wherein the common data is accessible to the first apparatus and the second apparatus; transmitting, to the third apparatus and based on a result of the decoding, first feedback information comprising a first feedback indication for the common data and a second feedback indication for the first private data; receiving a decoding result of the common data from the second apparatus; in accordance with a determination that at least one of the first feedback indication or the second feedback indication indicates a negative acknowledgement, re-decoding at least one of the common data or the first private data based on the received signal and the decoding result of the common data received from the second apparatus; and transmitting, to the third apparatus and based on a result of the re-decoding, second feedback information comprising at least one of a third feedback indication for the common data or a fourth feedback indication for the first private data.

In a fourth aspect of the present disclosure, there is provided a method. The method comprises: transmitting, to a first apparatus and a second apparatus, configuration information indicating a cooperation mode in decoding data between the first apparatus and the second apparatus; transmitting a signal to the first apparatus and the second apparatus, the signal being generated based on common data accessible to the first and second apparatuses, first private data of the first apparatus, and second private data of the second apparatus; receiving, from the first apparatus, first feedback information associated with the first apparatus, the first feedback information indicating a first feedback indication for the common data and a second feedback indication for the first private data; receiving, from the second apparatus, first feedback information associated with the second apparatus, the first feedback information indicating a first feedback indication for the common data and a second feedback indication for the second private data; in accordance with a determination that at least one feedback indication in the received first feedback information indicates a negative acknowledgement, receiving, from at least one of the first apparatus or the second apparatus, second feedback information for at least one of the common data, the first private data, or the second private data; and determining, based on the second feedback information, whether to perform a retransmission of the at least one of the common data, the first private data, or the second private data.

In a fifth aspect of the present disclosure, there is provided a first apparatus. The first apparatus comprises means for receiving, from a third apparatus, configuration information indicating a cooperation mode with a second apparatus in decoding data from the third apparatus; means for receiving, from the third apparatus, a signal; means for decoding, from the received signal, common data and first private data of the first apparatus, wherein the common data is accessible to the first apparatus and the second apparatus; means for transmitting, to the third apparatus and based on a result of the decoding, first feedback information comprising a first feedback indication for the common data and a second feedback indication for the first private data; means for receiving a decoding result of the common data from the second apparatus; in accordance with a determination that at least one of the first feedback indication or the second feedback indication indicates a negative acknowledgement, re-decoding at least one of the common data or the first private data based on the received signal and the decoding result of the common data received from the second apparatus; and means for transmitting, to the third apparatus and based on a result of the re-decoding, second feedback information comprising at least one of a third feedback indication for the common data or a fourth feedback indication for the first private data.

In a sixth aspect of the present disclosure, there is provided a second apparatus. The second apparatus comprises means for transmitting, to a first apparatus and a second apparatus, configuration information indicating a cooperation mode in decoding data between the first apparatus and the second apparatus; means for transmitting a signal to the first apparatus and the second apparatus, the signal being generated based on common data accessible to the first and second apparatuses, first private data of the first apparatus, and second private data of the second apparatus; means for receiving, from the first apparatus, first feedback information associated with the first apparatus, the first feedback information indicating a first feedback indication for the common data and a second feedback indication for the first private data; means for receiving, from the second apparatus, first feedback information associated with the second apparatus, the first feedback information indicating a first feedback indication for the common data and a second feedback indication for the second private data; means for in accordance with a determination that at least one feedback indication in the received first feedback information indicates a negative acknowledgement, receiving, from at least one of the first apparatus or the second apparatus, second feedback information for at least one of the common data, the first private data, or the second private data; and means for determining, based on the second feedback information, whether to perform a retransmission of the at least one of the common data, the first private data, or the second private data.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

FIG. 1 illustrates a schematic block diagram of architecture for rate splitting;

FIG. 2 illustrates a block diagram of an example communication environment in which example embodiments of the present disclosure can be implemented;

FIG. 3 illustrates a signaling flow for communications in accordance with some example embodiments of the present disclosure;

FIG. 4 illustrates a flowchart of a process for retransmissions for common data in accordance with some example embodiments of the present disclosure;

FIG. 5 illustrates a flowchart of a process for retransmissions for private data in accordance with some example embodiments of the present disclosure;

FIG. 6 illustrates a flowchart of a method implemented at a first apparatus in accordance with some example embodiments of the present disclosure;

FIG. 7 illustrates a flowchart of a method implemented at a third apparatus in accordance with some example embodiments of the present disclosure;

FIG. 8 illustrates a simplified block diagram of a device that is suitable for implementing example embodiments of the present disclosure; and

FIG. 9 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

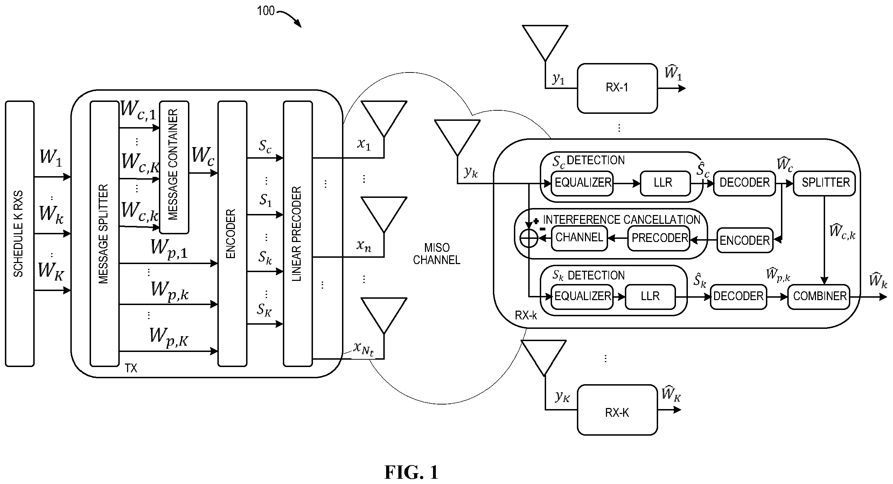

FIG. 1 illustrates, by way of example, a schematic block diagram of architecture 100 for rate splitting. As shown in FIG. 1, a transmitter (TX) communicates with a plurality of receivers (RX), e.g., $K$ receivers through a MISO channel. Each message transmitted to a receiver is split into a common part ($W_{c,1}$, $W_{c,2}$, $W_{c,3}$, ... . $W_{c,K}$) and a private part ($W_{p,1}$, $W_{p,2}$, $V_{p,3}$, ... . $W_{p,K}$) by a message splitter. Then all the common parts ($W_{c,1}$, $W_{c,2}$, $W_{c,3}$, ... . $W_{c,K}$) are combined into one message ($W_c$) by a message combiner. In some cases, the common parts are not same in the defined technique but all the common parts can be decoded by all receivers. In some cases, e.g. in the method(s) as disclosed herein, the common part is the same for all the receivers, i.e., $W_c = W_{c,1} = W_{c,2} = W_{c,3}, = W_{c,K}$. Number of the messages may be ($K + 1$) (private messages of each receiver and the common message). The encoder will encode the first message ($W_c$) into a common stream ($S_c$) and remaining K messages into private streams ($S_1,S_2,S_3,...S_K$). The common stream is pre-coded by a linear precoder in a multicast fashion and the private streams can be pre-coded by the linear precoder using multiuser MIMO precoders. The pre-coded signals $x_1, ... , x_n,...x_{Nt}$ are then transmitted by antennas of the transmitter to the $K$ receivers.

On the receiver side, each receiver first decodes the common stream ($\hat{S}_c$) by interpreting all private streams as noise. The receiver then removes the common stream through successive interference cancellation (SIC) from the received signal using the decoded common message ($\hat{W}_c$) and the channel state information. Each receiver then decodes its private stream ($\hat{S}_k$) from the derived signal (after SIC) by interpreting all other private streams as noise.

Regarding the hybrid automatic repeat request (HARQ) process for rate splitting multiple access, there is proposed a baseline HARQ process for rate splitting. In the baseline HARQ process for rate splitting, HARQ processes for the common stream and the private streams are handled independently. The network device maintains two HARQ process identifiers for each of the terminal devices (first identifier for common stream and second identifier for private stream). For example, a terminal device may provide a single positive acknowledgement (ACK) if both common stream and private stream are decoded successfully. As another example, terminal device may provide a single negative acknowledgement (NACK) if both common and private streams are not decoded successfully. As a further example, if only one of the streams is decoded successfully, then the terminal device may provide compound feedback such as $ACK_c$ and $NACK_p$ ($ACK_c$ for the common stream and $NACK_p$ for the private stream) or vice versa. The network device may schedule a retransmission for the common stream in the subsequent common stream and retransmission for private scheme in the subsequent private stream of that particular terminal device. The subsequent transmission by the network device is of the same format as during the initial transmission. However, the data in the common stream and/or in the private stream (e.g. each of the private streams) may contain new information (e.g. if no retransmission is scheduled), or may contain the same data for retransmission. An advanced HARQ algorithm has been proposed for rate splitting in downlink. In the advanced HARQ for rate splitting, the retransmissions of both common stream and private stream are scheduled in the subsequent common stream, wherein the common stream is encoded such that it has a higher probability of successful decoding in comparison to a private stream.

However, the HARQ algorithm proposed for rate splitting might not or cannot be directly applied for cooperative rate splitting (CRS). For CRS, the HARQ algorithm may utilize the information of cooperation. The cooperative rate splitting technique can be employed in a communication network, where the transmitter may be a network device (e.g. gNB) while the receivers are terminal devices (UEs). In CRS, cooperating terminal devices can share the common stream with each other. This cooperation enables the receiver to get the copy of the common stream from the nearby receiver instead of from the transmitter if it couldn't successfully decode the common stream in the first instant, for example. As another example, the receivers may, after successful decoding, apply some combining technique as well on the common stream to enhance its reliability or support higher data rate. So, if one of the terminal devices has not decoded the common stream and private stream (e.g. due to SIC failure), then it may not always be most efficient to retransmit the common stream from the network device. Any other terminal device in range, who has already successfully decoded the common stream, may share the common part with one or more terminal devices with errors in common part decoding. The network device may then only retransmit the private stream. However, the sharing of the common part with terminal device, having error in decoding common and private stream, might also enable the terminal device to decode the private stream as well. For example, the terminal device may remove the common stream from the previously received signal and then decode the private stream.

In cooperative multicast/broadcast service (MBS) session, it has been proposed that terminal devices who are receiving the same data through a MBS session would need to inform the network about their cooperation. This way, the network device may jointly treat the HARQ feedback of cooperating devices and limit the retransmissions from the network device, e.g. gNB. It implements the idea of cooperative MBS session wherein terminal devices will send individual HARQ ACK/NACK but the network device will treat them jointly. This limits the retransmission during cooperative MBS session in the scenarios, where one of the cooperating devices has correctly received the packet and another device has not received the packet correctly. In such a scenario, the network device will not need to retransmit the packet because the terminal device, which has already received the packet correctly may share it with other terminal device(s).

Let us consider a use case of two extended reality (XR) devices receiving partially similar data (e.g. users of the XR devices watching the same live football match or attending the same meeting or playing the same game) and are near to each other and connected to the same base station. In such a scenario, both terminal devices will have some common data and some part of the data will be private or exclusive to that particular device depending upon the field of view. It is possible that the terminal devices cooperate with each other to improve the probability of detection of the data transmission using the concept of the cooperative MBS session if they were receiving one hundred percentage of the same data.

In the case where the data is not one hundred percentage of the same but similar to some extent, the network device may not be able to send the data through the cooperative MBS session and network device will have to transmit the data to the two devices as two unicast streams. However, the cooperative rate splitting (CRS) may be applied at the network device to transmit the data to both terminal devices if the network device has the information that the terminal devices can cooperate and share the data partially (share common data).

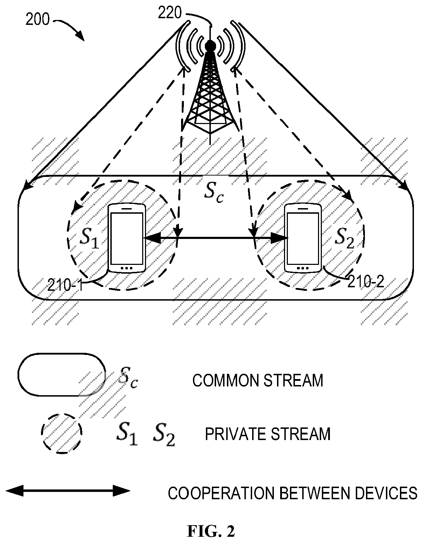

FIG. 2 illustrates a block diagram of an example communication environment 200 in which example embodiments of the present disclosure can be implemented. The communication environment 200 in the example of FIG. 2 involves two terminal devices 210-1 and 210-2 (collectively or individually referred to as terminal devices 210) and a network device 220. However, the number of the terminal devices may be more than two.

The data of the two terminal devices 210-1, 210-2 at the network device 220 is split into common parts ($W_{c1}$, $W_{c2}$) and private parts ($W_{p1}$, $W_{p2}$). The common parts of both terminal devices ($W_{c1}$, $W_{c2}$) are encoded into a single stream, $S_c$, using a common codebook, so it can be decoded by both terminal devices. The private parts of both terminal devices are encoded into private streams $S_1$ and $S_2$ and can be decoded by the intended terminal devices only. Terminal device 210-1 is able to encode the private stream $S_1$ but not $S_2$. Terminal device 210-2 is able to encode the private stream $S_2$ but not $S_1$. The three streams are linearly pre-coded using $P_c$, $P_1$ and $P_2$. The resulting transmit signal from network device is generated as follows:

$$X = P_c S_c + P_1 S_1 + P_2 S_2$$

The first term ($P_c S_c$) in the transmit signal is like multicast data to all the users and the remaining terms ($P_1 S_1$ and $P_2 S_2$) are pre-coded such that they have highest signal to interference plus noise ratio (SINR) at the intended receivers only. The signal from the source looks like multiuser MIMO streams. In total, number of the streams will be the total number of users plus one stream.

In this case, multiple HARQ processes will be running at the network device corresponding to the data streams. The common stream may benefit from the concept of cooperative MBS session and the network device will avoid retransmission if ACK is received from one of the terminal devices for the common stream. However, the HARQ process of the private streams will run independently and may have the problem identified below.

For example, the use cases mentioned above will have following possibilities of the HARQ feedback from the two terminal devices.

Table 1 Possible HARQ feedback from the two terminal devices

| Use Case | Device 210-1 | | Device 210-2 | |
| --- | --- | --- | --- | --- |
| | Common Stream | Private Stream | Common Stream | Private Stream |
| 1 | ACK | ACK | ACK | ACK |
| 2 | ACK | ACK | ACK | NACK |
| 3 | ACK | ACK | NACK | ACK |
| 4 | ACK | ACK | NACK | NACK |
| 5 | ACK | NACK | ACK | ACK |
| 6 | ACK | NACK | ACK | NACK |
| 7 | ACK | NACK | NACK | ACK |
| 8 | ACK | NACK | NACK | NACK |
| 9 | NACK | ACK | ACK | ACK |

(continued)

| Use Case | Device 210-1 | | Device 210-2 | |
|---|---|---|---|---|
| | Common Stream | Private Stream | Common Stream | Private Stream |
| 10 | NACK | ACK | ACK | NACK |
| 11 | NACK | ACK | NACK | ACK |
| 12 | NACK | ACK | NACK | NACK |
| 13 | NACK | NACK | ACK | ACK |
| 14 | NACK | NACK | ACK | NACK |
| 15 | NACK | NACK | NACK | ACK |
| 16 | NACK | NACK | NACK | NACK |

In rate splitting, if the common stream is not decoded, then the terminal device will not be able to perform SIC or may have a very low success probability in performing SIC. As a result, it would be very difficult for the terminal device to decode its private stream as well because in that case the noise would be common stream plus private streams of all other terminal devices. So, the chances of Use Cases 3, 7, 9, 10, 11, 12 and 15 in above Table 1 occurring are significantly lower.

When applying the concept of cooperative MBS, the network device will not retransmit the common streams in Use Cases 4, 8, 13 and 14 in Table 1. However, the network device will retransmit the private stream in the subsequent transmission for the terminal device from which NACK of the private stream is received. But there are chances that the terminal device, after getting the common stream from the other or cooperating terminal device, may have already successfully decoded the private stream by applying the SIC on the previous signal. So, in such cases, retransmissions of the private streams would be a waste of resources.

Let us consider a scenario wherein two or more terminal devices are connected to the same network device and are receiving partially similar data in the downlink. It is desirable that the retransmissions of the common data and private data can be limited, in order to avoid a waste of resources.

According to example embodiments of the present disclosure, there is proposed an improved solution for cooperation in rate splitting. In this solution, terminal devices may inform the network device that they can cooperate, e.g. partially cooperate, with the other terminal device in decoding data received from the network device. Partial cooperation may refer to cooperation wherein common data or decoding result of the common data is shared (not private data or decoding result of the private data). The network device may then configure the terminal devices so that based on the cooperation mode it may apply CRS to efficiently transmit the data to the cooperative terminal devices. The terminal devices then provide separate feedback indications for the common data and their private data to the network device. Further, after the cooperation between the terminal devices, a terminal device can re-decode, based on the decoding result of the common data from the other terminal device, either common data or private data if it is not successfully decoded, or both of the common data and private data if they are not successfully decoded. The terminal device transmits further feedback information to the network device to indicate whether the common data or the private data are successfully decoded after the re-decoding. At the network side, depending on the separate feedback indications, instead of directly retransmitting the common data or private data in the case of NACK, the network device waits for further feedback information from the terminal device(s).

In this way, the retransmissions can be limited, and thus the spectral efficiency of the network can also be improved due to the reduced number of retransmissions. In addition, the network capacity may also be increased as the number of satisfied users having strict requirement of lower latency, higher data rate and high reliability can be increased by exploiting rate splitting and scheduling common data through multicast, by leveraging cooperative gain and benefits of limited retransmissions. Further, the power efficiency of the communication system may also be improved, as less power will be required to forward a signal from a nearby cooperating terminal device to the other terminal device instead of retransmission from the network device in case of failure to receive a correct signal.

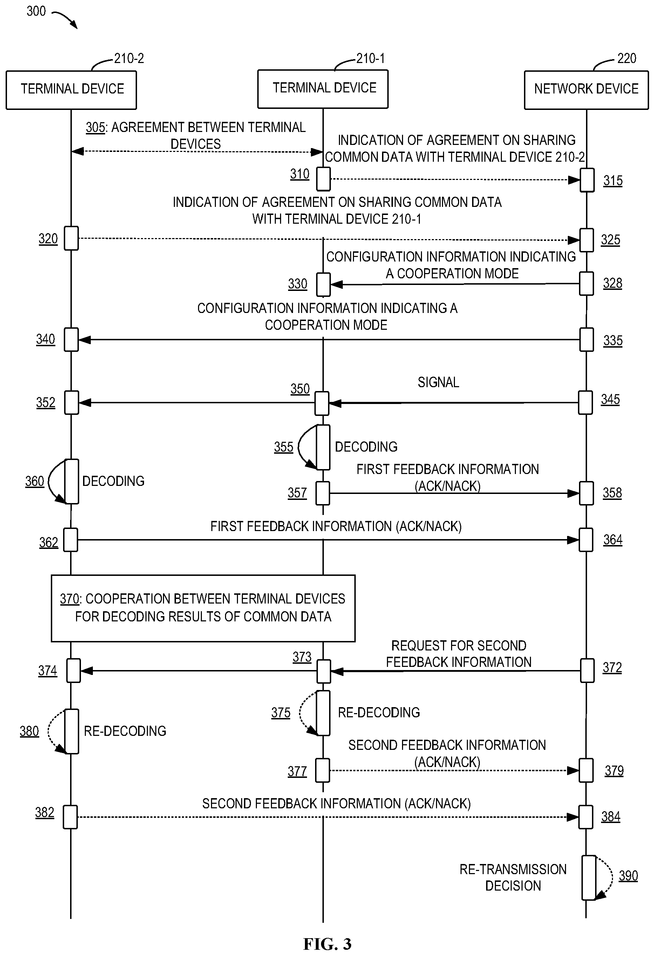

FIG. 3 illustrates a signaling flow 300 for communications in accordance with some example embodiments of the present disclosure. The signaling flow 300 is described with reference to FIG. 1. The signaling flow 300 involves the terminal devices 210-1, 210-2, and the network device 220.

In the signaling flow 300, it is assumed that the network device 220 can configure and schedule, or has configured and scheduled, the terminal devices 210-1 and 210-2 for cooperative rate splitting.

The network device 220 transmits (328, 335), to the terminal devices 210-1 and 210-2 configuration information indicating a cooperation mode in decoding data between the terminal devices 210-1 and 210-2. With the configuration information received (330, 340) from the network device 220, the terminal devices 210-1 and 210-2 can be informed about the cooperation, e.g. partial cooperation, among the terminal devices 210-1 and 210-2. The configuration information is to request the terminal devices 210-1 and 210-2 to try to decode the common data or private data again from a received signal after their cooperation (if not successful in the first instant).

In some example embodiments, the configuration information indicating the cooperation mode may be transmitted via radio resource control (RRC) signaling. In some example embodiments, such configuration information may be included in physical downlink shared channel (PDSCH) configuration information, e.g., in a PDSCH-Config information element which is sent over RRC signaling. It would be appreciated that the configuration information may be configured or transmitted in any other suitable ways.

In some example embodiments, there can be signaling between terminal device and network to inform about the cooperation, e.g. partial cooperation, among the terminal devices 210-1 and 210-2, so that network device 220 may enable cooperative feedback (which will be discussed in detail below).

For example, the terminal device 210-1 and the terminal device 210-2 may negotiate (305) with each other to reach an agreement on cooperating with each other in receiving similar data from the network device 220. In this case, the terminal device 210-1 may transmit to the terminal device 210-2 an indication of agreement on sharing common data with the terminal device 210-2, and may receive, from the terminal device 210-2, a third indication of agreement of the terminal device 210-2 on sharing common data. In some example embodiments, the network device 220 (e.g., based on the information from the application) may request the terminal devices 210-1, 210-2 to cooperate with each other in receiving the similar data from the network device 220. Alternatively, the terminal devices 210-1, 210-2 may discover themselves that they are receiving the similar data from the network device 220. Afterwards at least one terminal device 210 has agreed to cooperate, e.g. partially cooperate, with the terminal device 210 in receiving the similar data from the network device 220.

Further, the terminal device 210-1 and the terminal device 210-2 may each transmit (310, 320), to the network device 220, an indication of agreement between the two devices on sharing common data from the network device 220. As an example, the terminal device 210-1 and the terminal device 210-2 may each transmit a protocol data unit (PDU) session establishment request message over non-access stratum (NAS) signaling to inform the network device 220 about their agreement or possibility of cooperation, e.g. partial cooperation, with the other terminal device. By receiving (315, 325) the indications of agreements from the terminal devices 210-1 and 210-2, the network device 220 can determine that the cooperation mode can be configured for the two terminal devices.

The network device 220 decides to send data to the terminal devices 210-1 and 210-2 applying CRS. Accordingly, the network device 220 generates a signal based on common data for the terminal devices 210-1 and 210-2, private data of the terminal device 210-1, and private data of the terminal device 210-2. Then the network device 220 transmits (345) the signal to the terminal devices 210-1 and 210-2. In some example embodiments, the common data may be considered as in a common stream in the transmit signal and may be sent through cooperative MBS session. In some example embodiments, the private data of the terminal devices 210-1 and 210-2 may be considered as private streams, which may be transmitted as multi-user multiple-input multiple-output (MU-MIMO) streams.

The terminal devices 210-1 and 210-2 each receive (350, 352) the signal from the network device 220. Then the terminal devices 210-1 and 210-2 each decode (355, 360), from the received signal, common data and first private data of the terminal device 210-1.

Depending on the result of the decoding, the terminal devices 210-1 and 210-2 each transmits (357, 362) first feedback information to the network device 220. For the terminal device 210-1, the transmitted first feedback information includes a first feedback indication for the common data and a second feedback indication for the private data of the terminal device 210-1. For the terminal device 210-2, the transmitted first feedback information includes a first feedback indication for the common data and a second feedback indication for the private data of the terminal device 210-2.

As the common data and the private data are separately decoded, if the common data is successfully decoded from the received signal, the first feedback indication may include ACK. Otherwise, if the common data fails to be decoded from the received signal, the first feedback indication may include NACK. In some examples, the ACK/NACK indications may be HARQ ACK/NACK feedback which is transmitted in the HARQ process. In some example embodiments, when the network device 220 decides to configure CRS for both terminal devices 210-1, 210-2, the network device 220 may request the terminal devices to send HARQ ACK/NACK for each of its common and private stream.

In addition to transmitting the first feedback information, the terminal devices 210-1 and 210-2 performs (370) cooperation with each other by sharing decoding results of the common data with each other. The terminal device 210-1 transmits its decoding result of the common data (from the received signal) to the terminal device 210-2. The terminal device 210-2 may also transmit its decoding result of the common data (from the received signal) to the terminal device 210-1.

Within the signal transmitted through CRS, the common data is a part of data that is decodable or accessible to both terminal devices. In some cases, it is possible that a terminal device 210 is only interested in a portion of the transmitted common data and it may only decode that portion. If it wanted, this terminal device could also decode the portion for the other terminal device from the common stream. In some other cases, the common data may be the data of interest for both the terminal devices 210-1 and 210-2. In any cases, the terminal devices 210-1 and 210-2 may cooperate with each other about their decoding results of the common data.

With the decoding result of the common data received from the other terminal device, and if at least one of the first feedback indication for the common data or the second feedback indication for the private data indicates NACK, the terminal device 210-1 and/or the terminal device 210-2 re-decode (375, 380) at least one of the first feedback indication or the second feedback indication indicates a negative acknowledgement, re-decoding at least one of the common data or its private data based on the received signal and the decoding result of the common data received from the other terminal device. With the addition of the decoding result of the common data from the other terminal device, the terminal device 210 may be able to decode the common data or the private data that was not successfully decoded. The terminal devices 210-1, 210-2 may perform the re-decoding through various techniques, either currently available or to be developed in the future. As an example, one of the data decoding techniques may refer to "Hybrid Automatic Repeat Request for Downlink Rate-Splitting Multiple Access", Cerna Loli, R., Dizdar, O., Clerckx, B., & Popovski, P. (2023). However, it would be appreciated that any other suitable data decoding techniques may be applicable to allow a terminal device to decode (or at least attempt to decode) the common data or private data based on the signal that is received from the network device and the decoding result of the common data shared from the other terminal device.

In the case that the re-decoding is performed, the terminal device 210-1 and/or the terminal device 210-2 transmits (377, 382), to the network device 220 and based on a result of the re-decoding, second feedback information comprising at least one of a third feedback indication for the common data or a fourth feedback indication for the private data. That is, the second feedback information may include the feedback indication for the common data or the private data for which NACK is transmitted.

At the network side, the network device 220 may not perform retransmission on the common data and/or the private data when the first feedback information received (358, 364) from the terminal devices 210-1 and 210-2 and when NACK for the common data and/or the private data is indicated in the first feedback information. The network device 220 waits for further feedback information from the terminal devices 210-1 and/or 210-2. As illustrated in FIG. 3, the network device 220 may receive (379, 384), from at least one of the terminal device 210-1 or the terminal device 210-2, second feedback information for at least one of the common data, or the private data of the terminal device 210-1 and/or the terminal device 210-2. Then the network device 220 determines (390), based on the second feedback information, whether to perform a retransmission of at least one of the common data, or the private data of the terminal device 210-1 and/or the terminal device 210-2.

According to the example embodiments of the present disclosure, the network device 220 may formulate a new retransmission logic for the group of terminal devices 210 which are receiving the data based on CRS. According to this retransmission logic, in some example embodiments, the network device 220 will jointly process the feedback information of both terminal devices and may transmit (372) a request to one or both terminal devices 210 to send second feedback information about the common data or private data again if NACK is sent by the terminal device(s) 210. For example, if at least one feedback indication in the first feedback information from a terminal device 210 indicates NACK, the network device 220 may transmit, to the terminal device 210 which transmits the NACK, a request for retransmitting feedback information for at least one of the common data or the first private data. Upon the reception (373, 374) of the request, the terminal device(s) may further transmit the second feedback information later after the re-decoding. Alternatively, in some example embodiments, the terminal devices 210-1 and/or 210-2 may be configured to provide the second feedback information without explicit request from the network device 220. The network device 220 will retransmit the common data or the private data only if the terminal device(s) 210 are unable to decode the common data or the private data even after the cooperation.

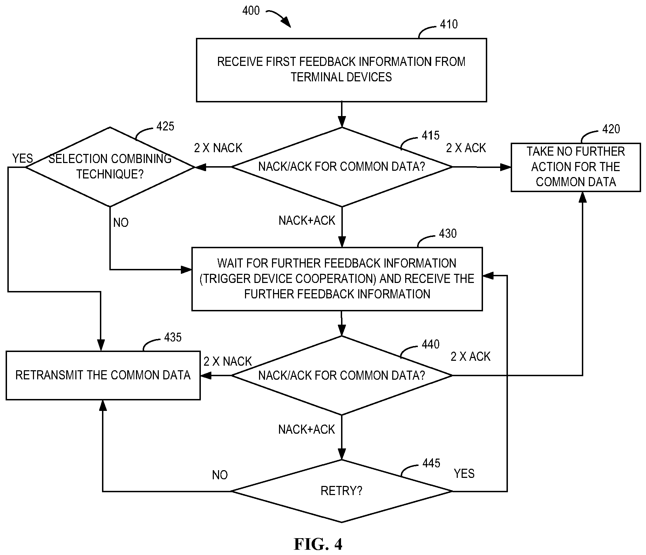

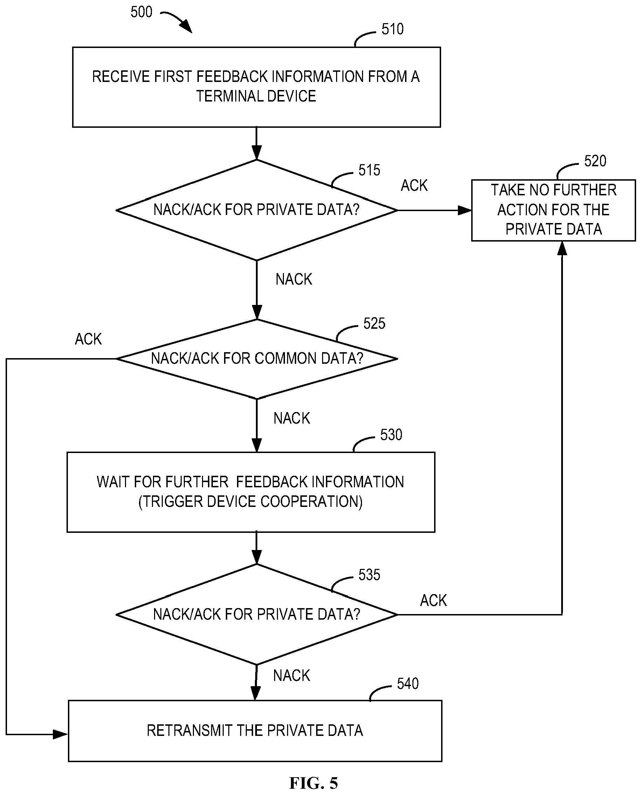

The retransmission logic for the common data and the private data at the network device 220 will be discussed below with reference to FIG. 4 and FIG. 5.

The detailed steps involved in the detailed embodiments of the signaling flow 300 through NAS and RRC signaling are described below. However, those concrete implementations should be only considered as an example way of implementing the principle of CRS and its HARQ retransmissions logic in the present disclosure. This principle can be implemented in various other ways.

FIG. 4 illustrates a flowchart of a process 400 for retransmissions for common data in accordance with some example embodiments of the present disclosure. The process 400 may be implemented at the network device 220 to determine whether common data is to be retransmitted to a terminal device (terminal device 210-1 or 210-2).

At block 410, the network device 220 receives first feedback information from the terminal devices 210-1 and 210-2. At block 415, the network device 220 checks the first indications for the common data in the received first feedback information, to determine whether NACK or ACK is received.

The network device 220, while learning from the cooperation of the terminal devices 210, may request the terminal devices to send the feedback information again and limit the retransmissions. In some example embodiments, the criteria for requesting the terminal devices 210 to send the HARQ feedback again may depend upon the combing technique applied at the multiple copies of the received signal at the receiver devices. It is assumed that the network device 220 also has information about the cooperative combining technique applied by the terminal devices 210. In some example embodiments, if at least one feedback indication in the first feedback information from a terminal device 210 indicates NACK, the network device 220 may transmit a request for retransmitting feedback information based on respective combining techniques applied by the terminal device 210.

In some cases, if both first feedback indications for the common data from the terminal device 210-1 and the terminal device 210-2 indicate ACK for the common data, the process 400 proceeds to block 420 where the network device 220 takes no further actions on the common data.

In some cases, if both first feedback indications for the common data from the terminal device 210-1 and the terminal device 210-2 indicate NACKs for the common data, the process 400 proceeds to block 425. At block 425, the network device 220 determines whether the combining technique applied by the terminal devices 210-1 and 210-2 is a selection combining (SC) technique.

If it is determined that the combining technique applied by the terminal devices 210-1 and 210-2 is a non-selection combining technique, the process 400 proceeds to block 430. The non-selection combining technique may include, for example, the maximum ratio combining (MRC), equal gain combing (EGC), or code combining (CC) technique. At block 430, the network device 220 waits for further feedback information and can receive second feedback information from the terminal device 210-1 and the terminal device 210-2. The second feedback information from the terminal device 210-1 or the terminal device 210-2 may include a feedback indication for the common data, to indicate ACK or NACK for the common data (e.g. a third feedback indication). In some example embodiments, the network device 220 may explicitly request the terminal device 210-1 and the terminal device 210-2 to send further feedback information.

In some cases, if both first feedback indications for the common data from the terminal device 210-1 and the terminal device 210-2 indicate NACK for the common data, and the combining technique applied by the terminal devices 210 is a selection combining (SC) technique, the process 400 proceeds to block 435. At block 435, the network device 220 performs a retransmission of the common data to the terminal device 210-1 and the terminal device 210-2, without waiting for the second feedback information from the terminal device 210-1. In the case of two NACK indications for the common data when the SC technique is applied, it may be difficult for the terminal device 210-1 or 210-2 to successfully re-decode the common data even after the cooperation of the decoding result of the common data from the other terminal device.

At the terminal device side, if the first feedback indication of a terminal device 210 (210-1 or 210-2) indicate NACK for the common data and the applied combining technique is a non-selection combining technique, the terminal devices 210-1 and 210-2 each may re-decode the common data based on the received signal and the decoding result of the common data received from the other terminal device. At this time, the terminal devices may re-decode the common data after application of the non-selection combining technique on the dual copies of the received signal, where one copy of the signal is received from the network device and the second copy is received from the other terminal device. The terminal devices 210-1 and 210-2 each may transmit second feedback information to the network device 220. The second feedback information from each of the terminal devices 210-1 and 210-2 indicates the feedback indication (ACK or NACK) for the common data based on a result of the re-decoding of the common data by the terminal device.

In some example embodiments, for the SC technique, the network device 220 may request a terminal device 210 to send further feedback information (e.g., HARQ feedback) after the cooperation (e.g., if it has sent NACK indications for the common data and its private data and the other terminal device 210 has at least sent an ACK indication for the common data). For the non-selection combining technique, the network device 220 may request both terminal devices 210 to send further feedback information again after the cooperation if both terminal devices have sent a NACK for common and private stream or may ask one of the devices to send the HARQ feedback again if it has sent a NACK for common/private stream). Alternatively, in some example embodiments, the terminal devices 210-1 and/or 210-2 may be configured to provide the second feedback information without explicit request from the network device 220.

Example responses of the proposed HARQ retransmission algorithm for CRS are summarized in below Table 2. The use cases of two NACKs for the common data are corresponding to Use Cases 11, 12, 15, and 16 in Table 2. The use case of two ACKs for the common data are corresponding to Use Cases 1, 2, 5, and 6 in Table 2. In Table 2, "CS" refers to a common stream carrying the common data, and "PS" refers to a private stream carrying the private data.

Still referring to FIG. 4, if it is determined at block 415 that a first feedback indication from one terminal device (210-1 or 210-2) indicates ACK and a first feedback indication from the other terminal device (210-2 or 210-1) indicates NACK for the common data, the process 400 proceeds to block 430 where the network device 220 waits for further feedback information and can receive second feedback information from the terminal device 210 which transmitted NACK for the common data previously. The second feedback information may include a feedback indication for the common data, which may indicate ACK for the common data (e.g. a third feedback indication). This is because the common data is successfully decoded at one of the terminal devices 210-1 and 210-2. After the cooperation between the two terminal devices, the other terminal device which fails to decode the common data from the received signal can determine the common data as the decoding result of the common data received from the other terminal device. The use cases of one ACK and one NACK for the common data are corresponding to Use Cases 3, 4, 7, 8, 9, 10, 13, 14 in Table 2.

With the second feedback information received from the terminal devices 210-1 and/or 210-2, the network device 220 checks, at block 440, the feedback indication for the common data in the received second feedback information, to determine whether NACK or ACK is received. In the case whether the second feedback information is expected from one terminal device and the feedback indication indicates ACK, the process 400 proceeds to block 420 where no further action is required for the common data. If the second feedback information is expected from both the terminal devices 210-1 and 210-2 and two ACK indications for the common data are included, the process 400 also proceeds to block 420 where no further action is required for the common data. At this time, the network device 220 determines that the common data is successfully received by both the terminal devices 210-1 and 210-2.

In some example embodiments, if both feedback indications for the common data from the terminal device 210-1 and the terminal device 210-2 indicate NACK for the common data, the process 400 proceeds to block 435, where the network device 220 performs a retransmission of the common data to the terminal device 210-1 and the terminal device 210-2. At the terminal device side, if the feedback indication of a terminal device 210 (210-1 or 210-2) indicates NACK for the common data, the terminal device may receive a retransmission of the common data from the network device 220.

In some example embodiments, if it is determined at block 440 that a feedback indication from one terminal device (210-1 or 210-2) indicates ACK and a feedback indication from the other terminal device (210-2 or 210-1) indicates NACK for the common data, the process 400 proceeds to block 445 where the network device 220 determines whether to retry again.

If it is determined to retry, the process 400 proceeds to block 430 where the network device 220 waits for further feedback information (and probably trigger the terminal devices 210 to perform cooperation again). In this case, the terminal devices 210-1 and 210-2 may cooperate with each other about the re-decoding result of the common data. The re-decoding result of the common data at one terminal device may help the other terminal device to successfully re-decode the common data after a second try. The terminal device 210-1 or 210-2 (which transmitted previously NACK for the common data) may transmit further feedback information (third feedback information) including a further feedback indication of ACK or NACK for the common data.

If the network device 220 decides not to retry, the process 400 proceeds to block 435 to retransmit the common data to the terminal device 210-1 or 210-2 (which transmitted previously NACK for the common data).

FIG. 5 illustrates a flowchart of a process 500 for retransmissions for private data in accordance with some example embodiments of the present disclosure. The process 500 may be implemented at the network device 220 to determine whether private data of a terminal device (terminal device 210-1 or 210-2) is to be retransmitted. The process 500 may be performed in parallel for each of the terminal devices 210-1 and 210-2.

At block 510, the network device 220 receives first feedback information from a terminal device 210. At block 515, the network device 220 checks the second indication for the private data in the received first feedback information, to determine whether NACK or ACK is received. If ACK is received, the process 500 proceeds to bock 520 where the network device 220 takes no further action for the private data of this terminal device.

If NACK for the private data is received, at block 525, the network device 220 further checks the first indication for the common data in the first feedback information, to determine whether NACK or ACK is received. If the first indication for the common data is NACK, at block 530, the network device 220 waits for further feedback information and can receive second feedback information from the terminal device 210. The second feedback information from the terminal device 210 may include a feedback indication for the private data, to indicate ACK or NACK for the private data (e.g. fourth feedback indication). In some example embodiments, the network device 220 may explicitly request the terminal device 210-1 and the terminal device 210-2 to send further feedback information.

At the terminal side, if the second feedback indication indicates NACK for the private data, the terminal device 210 may re-decode the private data based on the result of the re-decoding of the common data when the common data is re-decoded after the cooperation among the terminal devices 210-1 and 210-2. In some cases, as discussed with reference to FIG. 4, the common data with a NACK indication in the first feedback information may be retransmitted by the network device 220. In this case, the terminal device 210 may re-decode the private data based on the retransmission of the common data. For example, the terminal device 210 may first try to decode the common data from the retransmission, and then re-decode the private data based on the previously received signal and the decoding result of the common data from the retransmission. In some examples, the terminal device 210 may receive from the other terminal device the decoding result of the common data (if the retransmission is targeted to the other terminal device). In this case, the terminal device 210 may still try to re-decode its private data based on the cooperated common data and the previously received signal. Then the terminal device 210 may transmit, to the network device 220, the feedback indication for the private data (e.g. fourth feedback indication) based on a result of the re-decoding of the private data.

The use cases of NACK for the private data and NACK for the common data at a terminal device are corresponding to Use Cases 13, 14, 15, 16 (terminal device 210-1) and Use Cases 4, 8, 12, and 16 (terminal device 210-2) in Table 2.

In some cases, if it is determined at block 525 that the first indication for the common data is ACK, the process 500 proceeds to block 540, where the network device 220 performs a retransmission of the private data, without waiting for the second feedback information from the terminal device 210. This is because if the common data is successfully decoded by the terminal device 210 but the private data is failed to be decoded, it means the private data may not be further re-decoded even after the cooperation. The terminal device 210 may receive a retransmission of its private data from the network device 220, without performing the re-decoding of the private data. The use cases of NACK for the private data and ACK for the common data at a terminal device are corresponding to Use Cases 5, 6, 7, 8 (terminal device 210-1) and Use Cases 2, 6, 10, and 14 (terminal device 210-2) in Table 2.

With the second feedback information received from the terminal device 210, the network device 220 checks, at block 535, the feedback indication for the private data in the received second feedback information, to determine whether NACK or ACK is received. If ACK is received, the process 500 proceeds to bock 520 where the network device 220 takes no further action for the private data of this terminal device.

If NACK for the private data is received again, the process 500 proceeds to block 540 where the network device 220 performs a retransmission of the private data.

Example responses of the proposed HARQ retransmission algorithm for CRS are summarized in Table 2.

Table 2. Retransmission strategy for CRS

| Use Case | Terminal device 210-1 | | Terminal device 210-2 | | Network device 220 | | Cooperation between terminal devices | |
|---|---|---|---|---|---|---|---|---|
| | CS | PS | CS | PS | SC at terminal devices | MRC/EGC/CC at terminal devices | SC at terminal devices | MRC/EGC/CC at terminal devices |
| 1 | ACK | ACK | ACK | ACK | No retransmission | | | Both devices are always |
| 2 | ACK | ACK | ACK | NACK | Retransmission of private data of terminal device 210-2 | | | |

(continued)

| Use Case | Terminal device 210-1 | | Terminal device 210-2 | | Network device 220 | | Cooperation between terminal devices | |
|---|---|---|---|---|---|---|---|---|
| | CS | PS | CS | PS | SC at terminal devices | MRC/EGC/CC at terminal devices | SC at terminal devices | MRC/EGC/CC at terminal devices |
| 3 | ACK | ACK | NACK | ACK | No retransmission | | Common data from device 210-1 to 210-2 | accessible to the common data decoded at the other device |
| 4 | ACK | ACK | NACK | NACK | Network device may request or wait for further HARQ feedback from terminal device 210-2 for private data before retransmission. | | Common data from device 210-1 to 210-2 | |
| 5 | ACK | NACK | ACK | ACK | Retransmission of private data of terminal device 210-1 | | | |
| 6 | ACK | NACK | ACK | NACK | Retransmission of private data of terminal device 210-1 & 2 | | | |
| 7 | ACK | NACK | NACK | ACK | Retransmission of private data of terminal device 210-1 | | Common data from device 210-1 to 210-2 | |
| 8 | ACK | NACK | NACK | NACK | Retransmission of private data of terminal device 210-1 and network device may Request or wait for further HARQ feedback from terminal device 210-2 for private data before retransmission. | | Common data from device 210-1 to 210-2 | |
| 9 | NACK | ACK | ACK | ACK | No retransmission | | Common data from device 210-2 to 210-1 | |
| 10 | NACK | ACK | ACK | NACK | Retransmission of private data of terminal device 210-2 | | Common data from 210-2 to 210-1 | |
| 11 | NACK | ACK | NACK | ACK | Retransmission of common data | network device may Request or wait for further | | |

(continued)

| Use Case | Terminal device 210-1 | | Terminal device 210-2 | | Network device 220 | | Cooperation between terminal devices | |
|---|---|---|---|---|---|---|---|---|
| | CS | PS | CS | PS | SC at terminal devices | MRC/EGC/CC at terminal devices | SC at terminal devices | MRC/EGC/CC at terminal devices |
| | | | | | | HARQ feedback from both devices for common stream before retransmission. | | |
| 12 | NACK | ACK | NACK | NACK | Retransmission of common data and network device may request or wait for further HARQ feedback from terminal device 210-2 for private data before retransmission | network device may Request or wait for further HARQ feedback from both devices for common stream and from device 210-2 for private stream as well before retransmission. | | |
| 13 | NACK | NACK | ACK | ACK | network device may Request or wait for further HARQ feedback from terminal device 210-1 for private data before retransmission. | | Common data from terminal device 210-2 to 210-1 | |
| 14 | NACK | NACK | ACK | NACK | Retransmission of private data of terminal device 210-2 and network device may request or wait for further HARQ feedback from terminal device 210-1 for private data before retransmission. | | Common data from device 210-2 to 210-1 | |
| 15 | NACK | NACK | NACK | ACK | Retransmit common data and network device may request or wait for further HARQ | Network device may request or wait for further HARQ feedback from both devices for common stream | | |

(continued)

| Use Case | Terminal device 210-1 | | Terminal device 210-2 | | Network device 220 | | Cooperation between terminal devices | |
|---|---|---|---|---|---|---|---|---|
| | CS | PS | CS | PS | SC at terminal devices | MRC/EGC/CC at terminal devices | SC at terminal devices | MRC/EGC/ CC at terminal devices |
| | | | | | feedback from terminal device 210-1 for private data before retransmission. | and from device 210-1 for private stream as well before retransmission. | | |
| 16 | NACK | NACK | NACK | NACK | Retransmit common data and network de-vice may re-quest or wait for further HARQ feedback from both terminal devices for private data before retransmission. | Network device may request or wait for further HARQ feedback from both terminal devices for common data and for private data before retransmissions. | | |

The reason for requesting or waiting for the further feedback information is that the terminal device will get the decoding result of the common data from the cooperating terminal device, and the terminal device will use that to remove the common data from the previously received signal and may be able to decode its private data or not. Then this terminal device will send NACK or ACK feedback again if the selection combining technique is applied at the terminal device. If the MRC, EGC or CC technique is applied at the terminal devices then network device may request the terminal devices to send the further feedback information after the cooperation even if NACK is received from both terminal devices for the common data and the private data.

In some example embodiments, whenever the network device 220 requests the terminal device 210 to send the feedback information again, the HARQ timer of that data (common data or private data) may be restarted, or its duration may be increased. In some other example embodiments, if the terminal device(s) 210 are configured to send the second feedback information after the cooperation without explicit request, then the network device 220 may increase the HARQ timer if it expects the feedback information from the terminal device(s) 210.

It would be appreciated that the principle of CRS and its HARQ retransmission logic as discussed above may also be extended for the scenario where the number of terminal devices is greater than two.

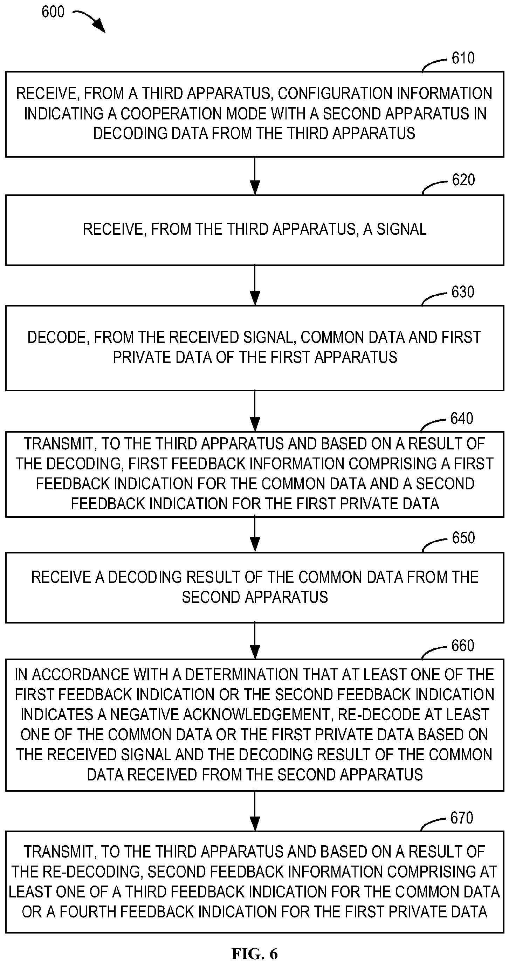

FIG. 6 illustrates a flowchart of an example method 600 implemented at a first apparatus in accordance with some example embodiments of the present disclosure. The first apparatus may be implemented as or included in a terminal device 210 in FIG. 2. The first apparatus may be a UE.

At block 610, the first apparatus receives, from a third apparatus (e.g., the network device 220 in FIG. 2), configuration information indicating a cooperation mode with a second apparatus (e.g., another terminal device 210 in FIG. 2) in decoding data from the third apparatus. The second apparatus may be a UE.

At block 620, the first apparatus receives, from the third apparatus, a signal.

At block 630, the first apparatus decodes, from the received signal, common data and first private data of the first apparatus, wherein the common data is accessible to the first apparatus and the second apparatus. For example, the first apparatus attempts to decode the common data and first private data of the first apparatus. For example, decoding may be interpreted as attempting to decode or at least attempting to decode.

At block 640, the first apparatus transmits, to the third apparatus and based on a result of the decoding, first feedback information comprising a first feedback indication for the common data and a second feedback indication for the first private data.

At block 650, the first apparatus receives a decoding result of the common data from the second apparatus; in accordance with a determination that at least one of the first feedback indication or the second feedback indication indicates a negative acknowledgement, re-decoding at least one of the common data or the first private data based on the received signal and the decoding result of the common data received from the second apparatus.

At block 660, the first apparatus transmits, to the third apparatus and based on a result of the re-decoding, second feedback information comprising at least one of a third feedback indication for the common data or a fourth feedback indication for the first private data.

In some example embodiments, the method 600 further comprises: transmitting, to the third apparatus, a first indication of agreement on sharing common data with the second apparatus; transmitting, to the second apparatus, a second indication of agreement on sharing common data with the second apparatus; or receiving, from the second apparatus, a third indication of agreement of the second apparatus on sharing common data.

In some example embodiments, the re-decoding comprises: in accordance with a determination that at least one of the first feedback indication or the second feedback indication indicates a negative acknowledgement, receiving, from the third apparatus, a request for retransmitting feedback information for at least one of the common data or the first private data; re-decoding, based on the request for retransmitting feedback information, the at least one of the common data or the first private data based on the received signal and the decoding result of the common data received from the second apparatus. In some example embodiments, the transmitting the second feedback information comprises: transmitting, based on a result of the re-decoding, the second feedback information to the third apparatus.

In some example embodiments, the re-decoding comprises: in accordance with a determination that at least one of the first feedback indication or the second feedback indication indicates a negative acknowledgement, re-decoding, according to a combining technique applied by the first apparatus on the received signal, the at least one of the common data or the first private data based on the signal and the decoding result of the common data received from the second apparatus.

In some example embodiments, the re-decoding comprises: in accordance with a determination that the first feedback indication indicates a negative acknowledgement for the common data, in accordance with a determination that the combining technique is a non-selection combining technique, re-decoding the common data based on the received signal and the decoding result of the common data received from the second apparatus. In some example embodiments, the transmitting the second feedback information comprises: transmitting, to the third apparatus, the third feedback indication for the common data based on a result of the re-decoding of the common data. In some example embodiments, the method 600 further comprises: in accordance with a determination that the combining technique is a selection combining technique, receiving a retransmission of the common data from the third apparatus, without performing re-decoding of the common data.

In some example embodiments, the re-decoding comprises: in accordance with a determination that the second feedback indication indicates a negative acknowledgement for the first private data, re-decoding the first private data based on the result of the re-decoding of the common data or the retransmission of the common data. In some example embodiments, the transmitting the second feedback information comprises: transmitting, to the third apparatus, the fourth feedback indication for the first private data based on a result of the re-decoding of the first private data.

In some example embodiments, the non-selection combining technique comprises one of the following: a maximum ratio combining technique, an equal gain combining technique, or a code combining technique.

In some example embodiments where the common data is successfully decoded at the second apparatus, and the re-decoding comprises: in accordance with a determination that the first feedback indication indicates a negative acknowledgement for the common data, determining the common data as the decoding result of the common data received from the second apparatus. In some example embodiments, the transmitting the second feedback information comprises: transmitting, to the third apparatus, the third feedback indication indicating a positive acknowledgement for the common data.

In some example embodiments, the re-decoding comprises: in accordance with a determination that the second feedback indication indicates a negative acknowledgement for the first private data, re-decoding the first private data based on the received signal and the determined common data. In some example embodiments, the transmitting the second feedback information comprises: transmitting, to the third apparatus, the fourth feedback indication for the first private data based on a result of the re-decoding of the first private data.

In some example embodiments, the method 600 further comprises: in accordance with a determination that the first feedback indication indicates a positive acknowledgement for the common data and the second feedback indication indicates a negative acknowledgement for the first private data, receiving a retransmission of the first private data from the third apparatus, without performing the re-decoding of the first private data.

In some example embodiments, the method 600 further comprises: transmitting the result of the decoding of the common data to the second apparatus.

In some example embodiments, the first apparatus and the second apparatus comprise terminal devices, and the third apparatus comprises a network device.

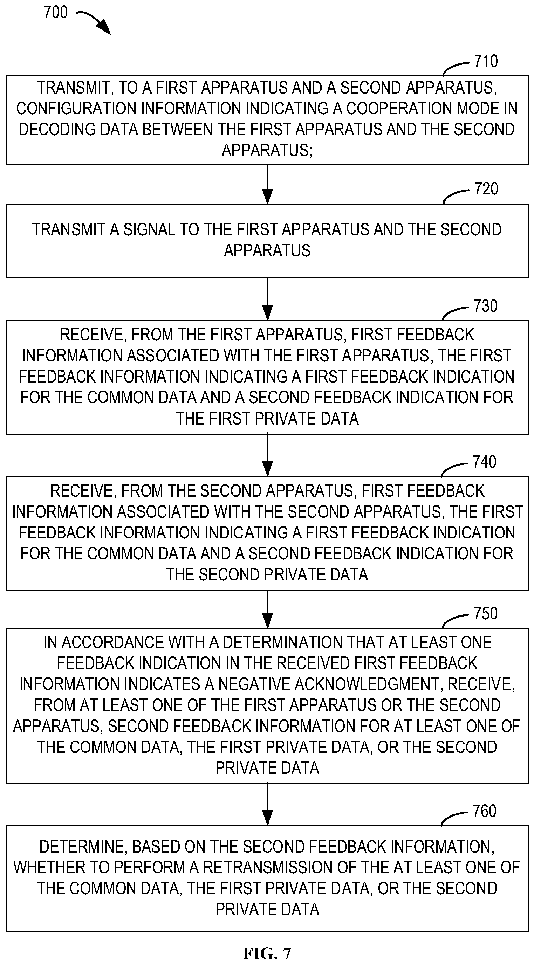

FIG. 7 illustrates a flowchart of an example method 700 implemented at a third apparatus in accordance with some example embodiments of the present disclosure. The third apparatus may be implemented as or included in the network device 220 in FIG. 2. The third apparatus may be a network node, e.g. gNB.

At block 710, the third apparatus transmits, to a first apparatus and a second apparatus (e.g., the terminal devices 210-1 and 210-2), configuration information indicating a cooperation mode in decoding data between the first apparatus and the second apparatus.

At block 720, the third apparatus transmits a signal to the first apparatus and the second apparatus, the signal being generated based on common data accessible to the first and second apparatuses, first private data of the first apparatus, and second private data of the second apparatus.

At block 730, the third apparatus receives, from the first apparatus, first feedback information associated with the first apparatus, the first feedback information indicating a first feedback indication for the common data and a second feedback indication for the first private data.

At block 740, the third apparatus receives, from the second apparatus, first feedback information associated with the second apparatus, the first feedback information indicating a first feedback indication for the common data and a second feedback indication for the second private data.

At block 750, the third apparatus, in accordance with a determination that at least one feedback indication in the received first feedback information indicates a negative acknowledgement, receives, from at least one of the first apparatus or the second apparatus, second feedback information for at least one of the common data, the first private data, or the second private data.

At block 760, the third apparatus determines, based on the second feedback information, whether to perform a retransmission of the at least one of the common data, the first private data, or the second private data.

In some example embodiments, the receiving the second feedback information comprises: in accordance with a determination that both first feedback indications for the common data from the first apparatus and the second apparatus indicate a negative acknowledgement for the common data, and in accordance with a determination that a combining technique applied by at least one of the first apparatus or the second apparatus is a non-selection combining technique, receiving the second feedback information from the at least one of the first apparatus or the second apparatus, the second feedback information comprising a third feedback indication for the common data. In some example embodiments, determining whether to perform a retransmission comprises: in accordance with a determination that both first feedback indications for the common data from the first apparatus and the second apparatus indicate a negative acknowledgement for the common data, and in accordance with a determination that a combining technique applied by at least one of the first apparatus or the second apparatus is a non-selection combining technique, determining, based on the third feedback indication, whether the common data is to be retransmitted to the at least one of the first apparatus or the second apparatus. In some example embodiments, the method 700 further comprises: in accordance with a determination that the combining technique is a selection combining technique, performing a retransmission of the common data to the at least one of the first apparatus or the second apparatus, without waiting for the second feedback information from the first apparatus.

In some example embodiments, the receiving the second feedback information comprises: in accordance with a determination that a second feedback indication from the first apparatus indicates a negative acknowledgement for the first private data, receiving the second feedback information from the first apparatus, the second feedback information comprising a fourth feedback indication for the first private data; and in accordance with a determination that a second feedback indication from the second apparatus indicates a negative acknowledgement for the second private data, receiving the second feedback information from the second apparatus, the second feedback information comprising a fourth feedback indication for the second private data.

In some example embodiments, the receiving the second feedback information comprises: in accordance with a determination that a first feedback indication from the second apparatus indicates a positive acknowledgement and a first feedback indication from the first apparatus indicates a negative acknowledgement for the common data, receiving, from the first apparatus, the second feedback information comprising a third feedback indication, the third feedback indication indicating a positive acknowledgement for the common data.

In some example embodiments, receiving the second feedback information comprises: in accordance with a determination that a second feedback indication from the first apparatus indicates a negative acknowledgement for the first private data, receiving, from the first apparatus, the second feedback information further comprising a fourth feedback indication, the fourth feedback indicating either a positive acknowledgement or a negative acknowledgement for the first private data.

In some example embodiments, determining whether to perform a retransmission comprises: in accordance with a determination that a first feedback indication from the first apparatus indicates a positive acknowledgement for the common data and a second feedback indication from the first apparatus indicates a negative acknowledgement for the first private data, performing a retransmission of the first private data to the first apparatus, without waiting for the second feedback information from the first apparatus. In some example embodiments, determining whether to perform a retransmission comprises: in accordance with a determination that a first feedback indication from the second apparatus indicates a positive acknowledgement for the common data and a second feedback indication from the second apparatus indicates a negative acknowledgement for the second private data, performing a retransmission of the second private data to the second apparatus, without waiting for the second feedback information from the second apparatus.

In some example embodiments, the method 700 further comprises: receiving, from the first apparatus, a first indication of agreement on sharing common data with the second apparatus; and receiving, from the second apparatus, a fourth indication of agreement on sharing common data with the first apparatus.

In some example embodiments, the method 700 further comprises: in accordance with a determination that at least one feedback indication in the received first feedback information indicates a negative acknowledgement, transmitting, to at least one of the first apparatus or the second apparatus which transmits a negative acknowledgement, a request for retransmitting feedback information for at least one of the common data or the first private data; and receiving second feedback information from at least one of the first apparatus or the second apparatus.

In some example embodiments, the method 700 further comprises: in accordance with a determination that at least one feedback indication in the received first feedback information indicates a negative acknowledgement, transmitting the request for retransmitting feedback information based on respective combining techniques applied by the first apparatus and the second apparatus.

In some example embodiments, a first apparatus capable of performing any of the method 600 (for example, the terminal device 210 in FIG. 2) may comprise means for performing the respective operations of the method 600. The means may be implemented in any suitable form. For example, the means may be implemented in a circuitry or software module. The first apparatus may be implemented as or included in the terminal device 110 in FIG. 2.

In some example embodiments, the first apparatus comprises means for receiving, from a third apparatus, configuration information indicating a cooperation mode with a second apparatus in decoding data from the third apparatus; means for receiving, from the third apparatus, a signal; means for decoding, from the received signal, common data and first private data of the first apparatus, wherein the common data is accessible to the first apparatus and the second apparatus; means for transmitting, to the third apparatus and based on a result of the decoding, first feedback information comprising a first feedback indication for the common data and a second feedback indication for the first private data; means for receiving a decoding result of the common data from the second apparatus; in accordance with a determination that at least one of the first feedback indication or the second feedback indication indicates a negative acknowledgement, re-decoding at least one of the common data or the first private data based on the received signal and the decoding result of the common data received from the second apparatus; and means for transmitting, to the third apparatus and based on a result of the re-decoding, second feedback information comprising at least one of a third feedback indication for the common data or a fourth feedback indication for the first private data.

In some example embodiments, the first apparatus further comprises: transmitting, to the third apparatus, a first indication of agreement on sharing common data with the second apparatus; transmitting, to the second apparatus, a second indication of agreement on sharing common data with the second apparatus; or receiving, from the second apparatus, a third indication of agreement of the second apparatus on sharing common data.

In some example embodiments, the means for re-decoding comprises: means for, in accordance with a determination that at least one of the first feedback indication or the second feedback indication indicates a negative acknowledgement, receiving, from the third apparatus, a request for retransmitting feedback information for at least one of the common data or the first private data; and means for re-decoding, based on the request for retransmitting feedback information, the at least one of the common data or the first private data based on the received signal and the decoding result of the common data received from the second apparatus. In some example embodiments, the means for transmitting the second feedback information comprises: means for transmitting, based on a result of the re-decoding, the second feedback information to the third apparatus.

In some example embodiments, the means for re-decoding comprises: means for, in accordance with a determination that at least one of the first feedback indication or the second feedback indication indicates a negative acknowledgement, re-decoding, according to a combining technique applied by the first apparatus on the received signal, the at least one of the common data or the first private data based on the signal and the decoding result of the common data received from the second apparatus.

In some example embodiments, the means for re-decoding comprises: means for, in accordance with a determination that the first feedback indication indicates a negative acknowledgement for the common data, and in accordance with a determination that the combining technique is a non-selection combining technique, re-decoding the common data based on the received signal and the decoding result of the common data received from the second apparatus. In some example embodiments, the means for transmitting the second feedback information comprises: means for transmitting, to the third apparatus, the third feedback indication for the common data based on a result of the re-decoding of the common data. In some example embodiments, the first apparatus further comprises: means for, in accordance with a determination that the combining technique is a selection combining technique, receiving a retransmission of the common data from the third apparatus, without performing re-decoding of the common data.

In some example embodiments, In some example embodiments, the means for re-decoding comprises: means for, in accordance with a determination that the second feedback indication indicates a negative acknowledgement for the first private data, re-decoding the first private data based on the result of the re-decoding of the common data or the retransmission of the common data. In some example embodiments, the means for transmitting the second feedback information comprises: means for transmitting, to the third apparatus, the fourth feedback indication for the first private data based on a result of the re-decoding of the first private data.

In some example embodiments, the non-selection combining technique comprises one of the following: a maximum ratio combining technique, an equal gain combining technique, or a code combining technique.

In some example embodiments where the common data is successfully decoded at the second apparatus, and the means for re-decoding comprises: means for, in accordance with a determination that the first feedback indication indicates a negative acknowledgement for the common data, determining the common data as the decoding result of the common data received from the second apparatus. In some example embodiments, the means for transmitting the second feedback information comprises: means for transmitting, to the third apparatus, the third feedback indication indicating a positive acknowledgement for the common data.

In some example embodiments, the means for re-decoding comprises: means for, in accordance with a determination that the second feedback indication indicates a negative acknowledgement for the first private data, re-decoding the first private data based on the received signal and the determined common data. In some example embodiments, the means for transmitting the second feedback information comprises: means for transmitting, to the third apparatus, the fourth feedback indication for the first private data based on a result of the re-decoding of the first private data.

In some example embodiments, the first apparatus further comprises: means for, in accordance with a determination that the first feedback indication indicates a positive acknowledgement for the common data and the second feedback indication indicates a negative acknowledgement for the first private data, receiving a retransmission of the first private data from the third apparatus, without performing the re-decoding of the first private data.

In some example embodiments, the first apparatus further comprises: transmitting the result of the decoding of the common data to the second apparatus.

In some example embodiments, the first apparatus and the second apparatus comprise terminal devices, and the third apparatus comprises a network device.

In some example embodiments, the first apparatus further comprises means for performing other operations in some example embodiments of the method 600 or the terminal device 210. In some example embodiments, the means comprises at least one processor; and at least one memory storing instructions that, when executed by the at least one processor, cause the performance of the first apparatus.

In some example embodiments, a third apparatus capable of performing any of the method 700 (for example, the network device 220 of FIG. 2) may comprise means for performing the respective operations of the method 700. The means may be implemented in any suitable form. For example, the means may be implemented in a circuitry or software module. The third apparatus may be implemented as or included in the network device 220 in FIG. 2.

In some example embodiments, the third apparatus comprises means for transmitting, to a first apparatus and a second apparatus, configuration information indicating a cooperation mode in decoding data between the first apparatus and the second apparatus; means for transmitting a signal to the first apparatus and the second apparatus, the signal being generated based on common data accessible to the first and second apparatuses, first private data of the first apparatus, and second private data of the second apparatus; means for receiving, from the first apparatus, first feedback information associated with the first apparatus, the first feedback information indicating a first feedback indication for the common data and a second feedback indication for the first private data; means for receiving, from the second apparatus, first feedback information associated with the second apparatus, the first feedback information indicating a first feedback indication for the common data and a second feedback indication for the second private data; means for in accordance with a determination that at least one feedback indication in the received first feedback information indicates a negative acknowledgement, receiving, from at least one of the first apparatus or the second apparatus, second feedback information for at least one of the common data, the first private data, or the second private data; and means for determining, based on the second feedback information, whether to perform a retransmission of the at least one of the common data, the first private data, or the second private data.

In some example embodiments, the means for receiving the second feedback information comprises: means for, in accordance with a determination that both first feedback indications for the common data from the first apparatus and the second apparatus indicate a negative acknowledgement for the common data, and in accordance with a determination that a combining technique applied by at least one of the first apparatus or the second apparatus is a non-selection combining technique, receiving the second feedback information from the at least one of the first apparatus or the second apparatus, the second feedback information comprising a third feedback indication for the common data. In some example embodiments, the means for determining whether to perform a retransmission comprises: means for, in accordance with a determination that both first feedback indications for the common data from the first apparatus and the second apparatus indicate a negative acknowledgement for the common data, and in accordance with a determination that a combining technique applied by at least one of the first apparatus or the second apparatus is a non-selection combining technique, determining, based on the third feedback indication, whether the common data is to be retransmitted to the at least one of the first apparatus or the second apparatus. In some example embodiments, the third apparatus further comprises: means for, in accordance with a determination that the combining technique is a selection combining technique, performing a retransmission of the common data to the at least one of the first apparatus or the second apparatus, without waiting for the second feedback information from the first apparatus.

In some example embodiments, the means for receiving the second feedback information comprises: means for, in accordance with a determination that a second feedback indication from the first apparatus indicates a negative acknowledgement for the first private data, receiving the second feedback information from the first apparatus, the second feedback information comprising a fourth feedback indication for the first private data; and means for, in accordance with a determination that a second feedback indication from the second apparatus indicates a negative acknowledgement for the second private data, receiving the second feedback information from the second apparatus, the second feedback information comprising a fourth feedback indication for the second private data.

In some example embodiments, the means for receiving the second feedback information comprises: means for, in accordance with a determination that a first feedback indication from the second apparatus indicates a positive acknowledgement and a first feedback indication from the first apparatus indicates a negative acknowledgement for the common data, receiving, from the first apparatus, the second feedback information comprising a third feedback indication, the third feedback indication indicating a positive acknowledgement for the common data.

In some example embodiments, the means for receiving the second feedback information comprises: means for, in accordance with a determination that a second feedback indication from the first apparatus indicates a negative acknowledgement for the first private data, receiving, from the first apparatus, the second feedback information further comprising a fourth feedback indication, the fourth feedback indicating either a positive acknowledgement or a negative acknowledgement for the first private data.

In some example embodiments, the means for determining whether to perform a retransmission comprises: means for, in accordance with a determination that a first feedback indication from the first apparatus indicates a positive acknowledgement for the common data and a second feedback indication from the first apparatus indicates a negative acknowledgement for the first private data, performing a retransmission of the first private data to the first apparatus, without waiting for the second feedback information from the first apparatus. In some example embodiments, the means for determining whether to perform a retransmission comprises: means for, in accordance with a determination that a first feedback indication from the second apparatus indicates a positive acknowledgement for the common data and a second feedback indication from the second apparatus indicates a negative acknowledgement for the second private data, performing a retransmission of the second private data to the second apparatus, without waiting for the second feedback information from the second apparatus.

In some example embodiments, the third apparatus further comprises: means for receiving, from the first apparatus, a first indication of agreement on sharing common data with the second apparatus; and means for receiving, from the second apparatus, a fourth indication of agreement on sharing common data with the first apparatus.

In some example embodiments, the third apparatus further comprises: means for, in accordance with a determination that at least one feedback indication in the received first feedback information indicates a negative acknowledgement, transmitting, to at least one of the first apparatus or the second apparatus which transmits a negative acknowledgement, a request for retransmitting feedback information for at least one of the common data or the first private data; and means for receiving second feedback information from at least one of the first apparatus or the second apparatus.

In some example embodiments, the third apparatus further comprises: means for, in accordance with a determination that at least one feedback indication in the received first feedback information indicates a negative acknowledgement, transmitting the request for retransmitting feedback information based on respective combining techniques applied by the first apparatus and the second apparatus.

In some example embodiments, the third apparatus further comprises means for performing other operations in some example embodiments of the method 700 or the network device 220. In some example embodiments, the means comprises at least one processor; and at least one memory storing instructions that, when executed by the at least one processor, cause the performance of the third apparatus.

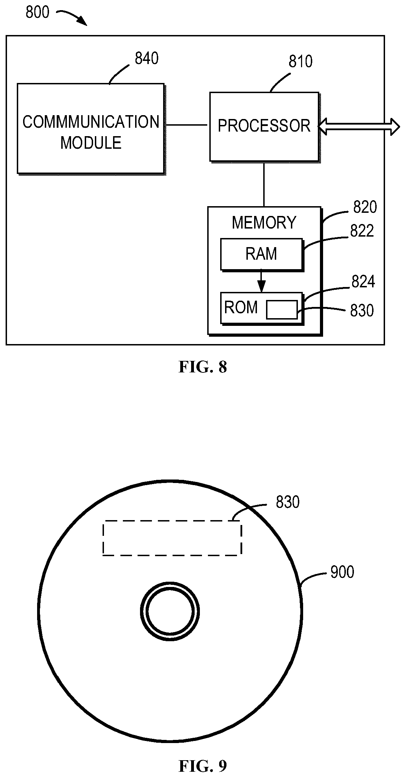

FIG. 8 is a simplified block diagram of a device 800 that is suitable for implementing example embodiments of the present disclosure. The device 800 may be provided to implement a communication device, for example, the terminal device 210 or the network device 220. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 2 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 9 shows an example of the computer readable medium 900 which may be in form of CD, DVD or other optical storage disk. The computer readable medium 900 has the program 830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

Some abbreviations used in the present disclosure are provided below with their representation in un-shortened form. It is noted that widely established and unique abbreviations can be assumed as known.

List of abbreviations

| MBS | Multicast/Broadcast Service. |
|---|---|
| PTM | Point to Multipoint |
| PTP | Point to Point |
| SSM | Source Specific IP Multicast address. |
| G-CS-RNTI | Group configured scheduling RNTI |
| G-RNTI | Group RNTI |
| RNTI | Radio Network Temporary Identifier |
| HARQ-ACK | Hybrid automatic repeat request acknowledgement |
| DCI | Downlink control information |
| PDCCH | Physical downlink control channel |
| PDSCH | Physical downlink shared channel |
| UE | User equipment |
| gNB | 5G Node B, base station |
| NR | New Radio |
| QoS | Quality of service |
| RRC | Radio Resource Control |
| XR | Extended reality |
| NAS | Non-Access-Stratum |
| TMGI | Temporary Mobile Group Identity |
| RS | Rate Splitting |
| CRS | Cooperative Rate Splitting |
| MRC | Maximum Ratio Combining |
| EGC | Equal Gain Combining |
| CC | Code Combining |
| SC | Selection Combining |
| PDU | Packet Data Unit |
| CS | Common Stream |
| PS | Private Stream |

**Claims**

1. A first apparatus comprising:

   at least one processor; and
   at least one memory storing instructions that, when executed by the at least one processor, cause the first apparatus at least to perform:

   receiving, from a third apparatus, configuration information indicating a cooperation mode with a second apparatus in decoding data from the third apparatus;

receiving, from the third apparatus, a signal;

decoding, from the received signal, common data and first private data of the first apparatus, wherein the common data is accessible to the first apparatus and the second apparatus;

transmitting, to the third apparatus and based on a result of the decoding, first feedback information comprising a first feedback indication for the common data and a second feedback indication for the first private data;

receiving a decoding result of the common data from the second apparatus;

in accordance with a determination that at least one of the first feedback indication or the second feedback indication indicates a negative acknowledgement, re-decoding at least one of the common data or the first private data based on the received signal and the decoding result of the common data received from the second apparatus;

and

transmitting, to the third apparatus and based on a result of the re-decoding, second feedback information comprising at least one of a third feedback indication for the common data or a fourth feedback indication for the first private data.

2. The first apparatus of claim 1, wherein the first apparatus is further caused to perform at least one of the following:

transmitting, to the third apparatus, a first indication of agreement on sharing common data with the second apparatus;

transmitting, to the second apparatus, a second indication of agreement on sharing common data with the second apparatus; or

receiving, from the second apparatus, a third indication of agreement of the second apparatus on sharing common data.

3. The first apparatus of claim 1 or 2, wherein the first apparatus is caused to perform:

in accordance with a determination that at least one of the first feedback indication or the second feedback indication indicates a negative acknowledgement, receiving, from the third apparatus, a request for retransmitting feedback information for at least one of the common data or the first private data;

re-decoding, based on the request for retransmitting feedback information, the at least one of the common data or the first private data based on the received signal and the decoding result of the common data received from the second apparatus; and

transmitting, based on a result of the re-decoding, the second feedback information to the third apparatus.

4. The first apparatus of any of claims 1 to 3, wherein the first apparatus is caused to perform:
in accordance with a determination that at least one of the first feedback indication or the second feedback indication indicates a negative acknowledgement, re-decoding, according to a combining technique applied by the first apparatus on the received signal, the at least one of the common data or the first private data based on the signal and the decoding result of the common data received from the second apparatus.

5. The first apparatus of claim 4, wherein the common data is failed to be successfully decoded at the second apparatus, and wherein the first apparatus is caused to perform:
in accordance with a determination that the first feedback indication indicates a negative acknowledgement for the common data,

in accordance with a determination that the combining technique is a non-selection combining technique, re-decoding the common data based on the received signal and the decoding result of the common data received from the second apparatus;

transmitting, to the third apparatus, the third feedback indication for the common data based on a result of the re-decoding of the common data; and

in accordance with a determination that the combining technique is a selection combining technique, receiving a retransmission of the common data from the third apparatus, without performing re-decoding of the common data.

6. The first apparatus of claim 5, wherein the first apparatus is caused to perform: in accordance with a determination that the second feedback indication indicates a negative acknowledgement for the first private data,

re-decoding the first private data based on the result of the re-decoding of the common data or the retransmission of the common data; and
transmitting, to the third apparatus, the fourth feedback indication for the first private data based on a result of the re-decoding of the first private data.

7.  The first apparatus of any of claims 1 to 6, wherein the common data is successfully decoded at the second apparatus, and wherein the first apparatus is caused to perform:

in accordance with a determination that the first feedback indication indicates a negative acknowledgement for the common data, determining the common data as the decoding result of the common data received from the second apparatus; and
transmitting, to the third apparatus, the third feedback indication indicating a positive acknowledgement for the common data.

8.  The first apparatus of claim 7, wherein the first apparatus is caused to perform:

in accordance with a determination that the second feedback indication indicates a negative acknowledgement for the first private data, re-decoding the first private data based on the received signal and the determined common data; and
transmitting, to the third apparatus, the fourth feedback indication for the first private data based on a result of the re-decoding of the first private data.

9.  The first apparatus of any of claims 1 to 8, wherein the first apparatus is further caused to perform:
in accordance with a determination that the first feedback indication indicates a positive acknowledgement for the common data and the second feedback indication indicates a negative acknowledgement for the first private data, receiving a retransmission of the first private data from the third apparatus, without performing the re-decoding of the first private data.

10. A third apparatus comprising:

at least one processor; and
at least one memory storing instructions that, when executed by the at least one processor, cause the second apparatus at least to perform:

transmitting, to a first apparatus and a second apparatus, configuration information indicating a cooperation mode in decoding data between the first apparatus and the second apparatus;
transmitting a signal to the first apparatus and the second apparatus, the signal being generated based on common data accessible to the first and second apparatuses, first private data of the first apparatus, and second private data of the second apparatus;
receiving, from the first apparatus, first feedback information associated with the first apparatus, the first feedback information indicating a first feedback indication for the common data and a second feedback indication for the first private data;
receiving, from the second apparatus, first feedback information associated with the second apparatus, the first feedback information indicating a first feedback indication for the common data and a second feedback indication for the second private data;
in accordance with a determination that at least one feedback indication in the received first feedback information indicates a negative acknowledgement, receiving, from at least one of the first apparatus or the second apparatus, second feedback information for at least one of the common data, the first private data, or the second private data; and
determining, based on the second feedback information, whether to perform a retransmission of the at least one of the common data, the first private data, or the second private data.

11. The third apparatus of claim 10, wherein the third apparatus is caused to perform:

in accordance with a determination that both first feedback indications for the common data from the first apparatus and the second apparatus indicate a negative acknowledgement for the common data, and

in accordance with a determination that a combining technique applied by at least one of the first apparatus or the second apparatus is a non-selection combining technique, receiving the second feedback information from the at least one of the first apparatus or the second apparatus, the second feedback information comprising a third feedback indication for the common data; and

determining, based on the third feedback indication, whether the common data is to be retransmitted to the at least one of the first apparatus or the second apparatus; and

wherein the third apparatus is further caused to perform:

in accordance with a determination that the combining technique is a selection combining technique, performing a retransmission of the common data to the at least one of the first apparatus or the second apparatus, without waiting for the second feedback information from the first apparatus.

12. The third apparatus of claim 11, wherein the third apparatus is caused to perform:

in accordance with a determination that a second feedback indication from the first apparatus indicates a negative acknowledgement for the first private data,

receiving the second feedback information from the first apparatus, the second feedback information comprising a fourth feedback indication for the first private data; and

in accordance with a determination that a second feedback indication from the second apparatus indicates a negative acknowledgement for the second private data,

receiving the second feedback information from the second apparatus, the second feedback information comprising a fourth feedback indication for the second private data.

13. The third apparatus of any of claims 10 to 12, wherein the third apparatus is caused to perform:

in accordance with a determination that a first feedback indication from the second apparatus indicates a positive acknowledgement and a first feedback indication from the first apparatus indicates a negative acknowledgement for the common data, receiving, from the first apparatus, the second feedback information comprising a third feedback indication, the third feedback indication indicating a positive acknowledgement for the common data.

14. The third apparatus of claim 13, wherein the third apparatus is caused to perform:

in accordance with a determination that a second feedback indication from the first apparatus indicates a negative acknowledgement for the first private data, receiving, from the first apparatus, the second feedback information further comprising a fourth feedback indication, the fourth feedback indicating either a positive acknowledgement or a negative acknowledgement for the first private data.

15. The third apparatus of any of claims 10 to 14, wherein the third apparatus is caused to perform:

in accordance with a determination that a first feedback indication from the first apparatus indicates a positive acknowledgement for the common data and a second feedback indication from the first apparatus indicates a negative acknowledgement for the first private data, performing a retransmission of the first private data to the first apparatus, without waiting for the second feedback information from the first apparatus; or

in accordance with a determination that a first feedback indication from the second apparatus indicates a positive acknowledgement for the common data and a second feedback indication from the second apparatus indicates a negative acknowledgement for the second private data, performing a retransmission of the second private data to the second apparatus, without waiting for the second feedback information from the second apparatus.

**FIG. 1**

FIG. 2

300

| TERMINAL DEVICE | 210-2 | | TERMINAL DEVICE | 210-1 | | NETWORK DEVICE | 220 |

305: AGREEMENT BETWEEN TERMINAL DEVICES

INDICATION OF AGREEMENT ON SHARING COMMON DATA WITH TERMINAL DEVICE 210-2

310                                                                        315

INDICATION OF AGREEMENT ON SHARING COMMON DATA WITH TERMINAL DEVICE 210-1

320                                                                        325

CONFIGURATION INFORMATION INDICATING A COOPERATION MODE

330                                                                        328

CONFIGURATION INFORMATION INDICATING A COOPERATION MODE

340                                                                        335

SIGNAL

350

352                                                                        345

355   DECODING

FIRST FEEDBACK INFORMATION (ACK/NACK)

357                                                                        358

360   DECODING

FIRST FEEDBACK INFORMATION (ACK/NACK)

362                                                                        364

370: COOPERATION BETWEEN TERMINAL DEVICES FOR DECODING RESULTS OF COMMON DATA

REQUEST FOR SECOND FEEDBACK INFORMATION

373

374                                                                        372

375   RE-DECODING

380   RE-DECODING

SECOND FEEDBACK INFORMATION (ACK/NACK)

377                                                                        379

SECOND FEEDBACK INFORMATION (ACK/NACK)

382                                                                        384

RE-TRANSMISSION DECISION                                                    390

**FIG. 3**

400

410

RECEIVE FIRST FEEDBACK INFORMATION FROM
TERMINAL DEVICES

425

415

420

YES — SELECTION COMBINING
TECHNIQUE?

2 X NACK

NACK/ACK FOR COMMON DATA?

2 X ACK

TAKE NO FURTHER
ACTION FOR THE
COMMON DATA

NO

NACK+ACK

430

WAIT FOR FURTHER FEEDBACK INFORMATION
(TRIGGER DEVICE COOPERATION) AND RECEIVE THE
FURTHER FEEDBACK INFORMATION

435

440

RETRANSMIT THE COMMON DATA

2 X NACK

NACK/ACK FOR COMMON DATA?

2 X ACK

NACK+ACK

445

NO

RETRY?

YES

**FIG. 4**

500

510

RECEIVE FIRST FEEDBACK INFORMATION FROM A
TERMINAL DEVICE

515

NACK/ACK FOR PRIVATE DATA?

ACK

520

TAKE NO FURTHER
ACTION FOR THE
PRIVATE DATA

NACK

525

NACK/ACK FOR COMMON DATA?

ACK

NACK

530

WAIT FOR FURTHER FEEDBACK INFORMATION
(TRIGGER DEVICE COOPERATION)

535

NACK/ACK FOR PRIVATE DATA?

ACK

NACK

540

RETRANSMIT THE PRIVATE DATA

**FIG. 5**

600

610
RECEIVE, FROM A THIRD APPARATUS, CONFIGURATION INFORMATION INDICATING A COOPERATION MODE WITH A SECOND APPARATUS IN DECODING DATA FROM THE THIRD APPARATUS

620
RECEIVE, FROM THE THIRD APPARATUS, A SIGNAL

630
DECODE, FROM THE RECEIVED SIGNAL, COMMON DATA AND FIRST PRIVATE DATA OF THE FIRST APPARATUS

640
TRANSMIT, TO THE THIRD APPARATUS AND BASED ON A RESULT OF THE DECODING, FIRST FEEDBACK INFORMATION COMPRISING A FIRST FEEDBACK INDICATION FOR THE COMMON DATA AND A SECOND FEEDBACK INDICATION FOR THE FIRST PRIVATE DATA

650
RECEIVE A DECODING RESULT OF THE COMMON DATA FROM THE SECOND APPARATUS

660
IN ACCORDANCE WITH A DETERMINATION THAT AT LEAST ONE OF THE FIRST FEEDBACK INDICATION OR THE SECOND FEEDBACK INDICATION INDICATES A NEGATIVE ACKNOWLEDGEMENT, RE-DECODE AT LEAST ONE OF THE COMMON DATA OR THE FIRST PRIVATE DATA BASED ON THE RECEIVED SIGNAL AND THE DECODING RESULT OF THE COMMON DATA RECEIVED FROM THE SECOND APPARATUS

670
TRANSMIT, TO THE THIRD APPARATUS AND BASED ON A RESULT OF THE RE-DECODING, SECOND FEEDBACK INFORMATION COMPRISING AT LEAST ONE OF A THIRD FEEDBACK INDICATION FOR THE COMMON DATA OR A FOURTH FEEDBACK INDICATION FOR THE FIRST PRIVATE DATA

**FIG. 6**

700

710

TRANSMIT, TO A FIRST APPARATUS AND A SECOND APPARATUS, CONFIGURATION INFORMATION INDICATING A COOPERATION MODE IN DECODING DATA BETWEEN THE FIRST APPARATUS AND THE SECOND APPARATUS;

720

TRANSMIT A SIGNAL TO THE FIRST APPARATUS AND THE SECOND APPARATUS

730

RECEIVE, FROM THE FIRST APPARATUS, FIRST FEEDBACK INFORMATION ASSOCIATED WITH THE FIRST APPARATUS, THE FIRST FEEDBACK INFORMATION INDICATING A FIRST FEEDBACK INDICATION FOR THE COMMON DATA AND A SECOND FEEDBACK INDICATION FOR THE FIRST PRIVATE DATA

740

RECEIVE, FROM THE SECOND APPARATUS, FIRST FEEDBACK INFORMATION ASSOCIATED WITH THE SECOND APPARATUS, THE FIRST FEEDBACK INFORMATION INDICATING A FIRST FEEDBACK INDICATION FOR THE COMMON DATA AND A SECOND FEEDBACK INDICATION FOR THE SECOND PRIVATE DATA

750

IN ACCORDANCE WITH A DETERMINATION THAT AT LEAST ONE FEEDBACK INDICATION IN THE RECEIVED FIRST FEEDBACK INFORMATION INDICATES A NEGATIVE ACKNOWLEDGMENT, RECEIVE, FROM AT LEAST ONE OF THE FIRST APPARATUS OR THE SECOND APPARATUS, SECOND FEEDBACK INFORMATION FOR AT LEAST ONE OF THE COMMON DATA, THE FIRST PRIVATE DATA, OR THE SECOND PRIVATE DATA

760

DETERMINE, BASED ON THE SECOND FEEDBACK INFORMATION, WHETHER TO PERFORM A RETRANSMISSION OF THE AT LEAST ONE OF THE COMMON DATA, THE FIRST PRIVATE DATA, OR THE SECOND PRIVATE DATA

**FIG. 7**

800

840    810

| COMMMUNICATION MODULE | | PROCESSOR |

MEMORY    820

RAM    822

ROM    824
          830

**FIG. 8**

830

900

**FIG. 9**

Europäisches
Patentamt

European
Patent Office

Office européen
des brevets

**EUROPEAN SEARCH REPORT**

Application Number

EP 24 15 0785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YIJIE MAO ET AL: "Rate-Splitting Multiple Access: Fundamentals, Survey, and Future Research Trends", ARXIV.ORG, CORNELL UNIVERSITY LIBRARY, 201 OLIN LIBRARY CORNELL UNIVERSITY ITHACA, NY 14853, 30 September 2022 (2022-09-30), XP091330505, DOI: 10.1109/COMST.2022.3191937 * Sections II-III and V-VII * | 1-15 | INV.<br>H04L1/1812<br>H04L1/06<br>H04L1/1829<br>H04B7/026<br>H04L1/00 |
| A,D | RAFAEL CERNA LOLI ET AL: "Hybrid Automatic Repeat Request for Downlink Rate-Splitting Multiple Access", ARXIV.ORG, CORNELL UNIVERSITY LIBRARY, 201 OLIN LIBRARY CORNELL UNIVERSITY ITHACA, NY 14853, 9 April 2023 (2023-04-09), XP091480692, * Sections II-III * | 1-15 | |
| A | CLERCKX BRUNO ET AL: "A Primer on Rate-Splitting Multiple Access: Tutorial, Myths, and Frequently Asked Questions", IEEE JOURNAL ON SELECTED AREAS IN COMMUNICATIONS, IEEE SERVICE CENTER, PISCATAWAY, US, vol. 41, no. 5, 6 February 2023 (2023-02-06), pages 1265-1308, XP011938559, ISSN: 0733-8716, DOI: 10.1109/JSAC.2023.3242718 [retrieved on 2023-02-06] * Sections III-VII * | 1-15 | TECHNICAL FIELDS SEARCHED (IPC)<br><br>H04L<br>H04B |

The present search report has been drawn up for all claims

| Place of search | Date of completion of the search | Examiner |
|---|---|---|
| Munich | 21 June 2024 | Gabry, Frederic |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CERNA LOLI ; R., DIZDAR ; O., CLERCKX, B ; POPOVSKI, P**. *Hybrid Automatic Repeat Request for Downlink Rate-Splitting Multiple Access*, 2023